# EUROPEAN PATENT APPLICATION

(11) **EP 4 742 419 A1**
(43) Date of publication of application: **13.05.2026**
(21) Application number: 24856719.0
(22) Date of filing: 09.08.2024
(51) Int. Cl.: H01M 50/46, H01M 50/446, H01M 50/42, H01M 50/414, H01M 50/403, H01M 50/533, H01M 10/052

(54) **SEPARATOR FOR ELECTROCHEMICAL DEVICE, MANUFACTURING METHOD THEREFOR, AND ELECTROCHEMICAL DEVICE COMPRISING SEPARATOR**

(30) Priority: 21.08.2023 KR 20230109314; 08.08.2024 KR 20240106074
(71) Applicant: LG Energy Solution, Ltd., Seoul 07335 (KR)
(72) Inventor: KIM, Kyung Tae, Daejeon 34122 (KR); KWON, Su Jee, Daejeon 34122 (KR); JEONG, So Mi, Daejeon 34122 (KR); BAE, Won Sik, Daejeon 34122 (KR)
(74) Representative: Hoffmann Eitle
(86) International application number: PCT/KR2024/011868
(87) International publication number: WO 2025/042107

(57) **Abstract**

The present disclosure relates to a separator for an electrochemical device, a method for manufacturing the same, and an electrochemical device including the separator, and more particularly, to a separator for an electrochemical device including an adhesive portion provided in a small amount on an outer portion of a coating layer, thereby improving dry adhesive strength and wet adhesive strength and preventing a phenomenon of separator folding during a lamination process, a method for manufacturing the same, and an electrochemical device including the separator.

## Description

### Technical Field

The present disclosure claims priority to and the benefits of Korean Patent Application Nos. 10-2023-0109314 and 10-2024-0106074 respectively filed with the Korean Intellectual Property Office on August 21, 2023 and August 8, 2024, the entire contents of which are incorporated herein by reference.

The present disclosure relates to a separator for an electrochemical device, a method for manufacturing the same, and an electrochemical device including the separator. In particular, the present disclosure relates to a separator for an electrochemical device including an adhesive portion provided in a small amount on an outer portion of a coating layer, thereby capable of improving dry adhesive strength and wet adhesive strength and preventing a phenomenon of separator folding during a lamination process, a method for manufacturing the same, and an electrochemical device including the separator.

### Background Art

In order to solve current problems in performance regarding separator folding of medium- to large-sized cells such as electric vehicles (EV) and energy storage systems (ESS), an ALS (advanced lamination & stacking (L&S)) method, which is an improved L&S (lamination & stacking) assembly process, may be applied.

From the viewpoint of separator adhesive strength, an infrared heater (IR heater) may be used for uniform heat transfer during roll lamination and a short-side portion may be sealed to improve a phenomenon of folding of the short-side portion of a separator as a method of improving the ALS process.

However, in the sealing of the short-side portion, a problem of damages to an electrode tab portion may occur, and it may be difficult to secure adhesive strength of the short-side portion of a separator since the sealing is conducted with weak pressure, resulting in a phenomenon of separator folding when injecting an electrolyte liquid.

Accordingly, development of a separator for resolving the above-described problem and improving adhesive strength between an electrode and the separator has been required.

### DISCLOSURE

### Technical Problem

The present disclosure is directed to providing a separator for an electrochemical device including an adhesive portion provided in a small amount on an outer portion of a coating layer to maintain adhesive strength during a process of manufacturing a secondary battery in which an electrode and a separator are laminated, a method for manufacturing the same, and an electrochemical device including the separator.

However, problems to be solved by the present disclosure are not limited to the above-mentioned problem, and other problems not mentioned will be clearly understood by those skilled in the art from the following description.

### Technical Solution

One embodiment of the present disclosure provides a separator for an electrochemical device, the separator including: a porous polymer substrate; a coating layer provided on at least one surface of the porous polymer substrate and including inorganic particles and a first polymer binder; and an adhesive portion provided on at least a portion of an outer portion of the coating layer and including second polymer binder particles and third polymer binder particles, wherein the adhesive portion includes a plurality of dots, and the plurality of dots are arranged in parallel in a supply direction (MD, machine direction) of the coating layer.

According to one embodiment of the present disclosure, the second polymer binder particle may be an acryl-based polymer binder, and the third polymer binder particle may be a polyvinyl acetate-based polymer binder.

According to one embodiment of the present disclosure, the second polymer binder particles and the third polymer binder particles may have a weight ratio of 9:1 to 4:6.

According to one embodiment of the present disclosure, the adhesive portion may have a predetermined pattern formed therein.

According to one embodiment of the present disclosure, the pattern may include a non-coating area in which the adhesive portion is not provided on at least a portion of an outer portion of the coating layer.

According to one embodiment of the present disclosure, the plurality of dots may have a constant spacing.

According to one embodiment of the present disclosure, the plurality of dots may have a spacing of 50 µm or greater and 500 µm or less.

According to one embodiment of the present disclosure, the adhesive portion may have a thickness of 0.1 µm or greater and 1 µm or less.

According to one embodiment of the present disclosure, the acryl-based polymer binder may have the degree of crosslinking of 70% or greater.

One embodiment of the present disclosure provides a method for manufacturing a separator for an electrochemical device, the method including: providing a porous polymer substrate; providing a coating layer by coating a slurry for a coating layer including inorganic particles and a first polymer binder on at least one surface of the porous polymer substrate; and providing an adhesive portion by coating a slurry for an adhesive portion including an acryl-based polymer binder and a polyvinyl acetate-based polymer binder in a weight ratio of 9:1 to 4:6 on at least a portion of an outer portion of the coating layer in a supply direction (MD, machine direction) of the coating layer.

According to one embodiment of the present disclosure, the providing of an adhesive portion by coating the slurry for an adhesive portion may be performed using a spray, an inkjet, a dispenser or a nozzle.

One embodiment of the present disclosure provides an electrochemical device including: a positive electrode; a negative electrode; and a separator interposed between the positive electrode and the negative electrode.

According to one embodiment of the present disclosure, the positive electrode may include a positive electrode tab portion formed to extend to one side, and the negative electrode may include a negative electrode tab portion formed to extend to the other side.

### Advantageous Effects

A separator for an electrochemical device according to one embodiment of the present disclosure is capable of improving dry adhesive strength and wet adhesive strength by including an adhesive portion provided in a small amount on an outer portion of a coating layer.

A method for manufacturing a separator for an electrochemical device according to one embodiment of the present disclosure is capable of improving manufacturing readiness, and preventing a phenomenon of separator folding by improving adhesive strength of the separator by providing an adhesive portion in a small amount on an outer portion of a coating layer before an assembly process.

An electrochemical device including the separator according to one embodiment of the present disclosure is capable of improving dry adhesive strength and wet adhesive strength, and preventing a phenomenon of separator folding during a lamination process by including an adhesive portion provided in a small amount on an outer portion of a coating layer.

### Brief Description of Drawings

FIG. 1 is a schematic diagram illustrating a separator provided with an adhesive portion according to one embodiment of the present disclosure viewed from above.
FIG. 2 is a schematic diagram illustrating a cross-section structure obtained by cutting the separator of FIG. 1 along the X-X' axis.
FIG. 3 is a schematic diagram illustrating a cross-section structure obtained by cutting the separator of FIG. 1 along the Y-Y' axis.

### Best Mode

In the present specification, a description of a certain part "including" certain components means that it may further include other components, and does not exclude other components unless particularly stated on the contrary.

In the present specification, "A and/or B" means "A and B, or A or B".

In the present specification, a description of being provided "on" one component means that another component may be further placed, and does not exclude another component being placed in between unless particularly stated on the contrary.

In the present specification, a property of "having pores" means that an object includes a plurality of pores, and by the structure of the pores being interconnected with each other, gaseous and/or liquid fluids may pass from one side to the other side of the object.

In the present specification, a separator has porous properties including a plurality of pores, and performs a role of a porous ion-conducting barrier allowing ions to pass through while blocking an electrical contact between a negative electrode and a positive electrode in an electrochemical device.

Hereinafter, embodiments of the present disclosure will be described in detail with reference to accompanying drawings. The drawings may be exaggerated, omitted or schematically illustrated in order to describe or emphasize the embodiments of the present disclosure.

Hereinafter, the present disclosure will be described in more detail.

One embodiment of the present disclosure provides a separator for an electrochemical device, the separator including: a porous polymer substrate 110; a coating layer 130 provided on at least one surface of the porous polymer substrate and including inorganic particles and a first polymer binder; and an adhesive portion 150 provided on at least a portion of an outer portion of the coating layer and including second polymer binder particles and third polymer binder particles, wherein the adhesive portion includes a plurality of dots, and the plurality of dots are arranged in parallel in a supply direction (MD, machine direction) of the coating layer.

The separator for an electrochemical device 100 according to one embodiment of the present disclosure includes the adhesive portion 150 provided in a small amount on an outer portion of the coating layer 130, thereby improving dry adhesive strength and wet adhesive strength, and preventing a phenomenon of separator folding during a lamination process.

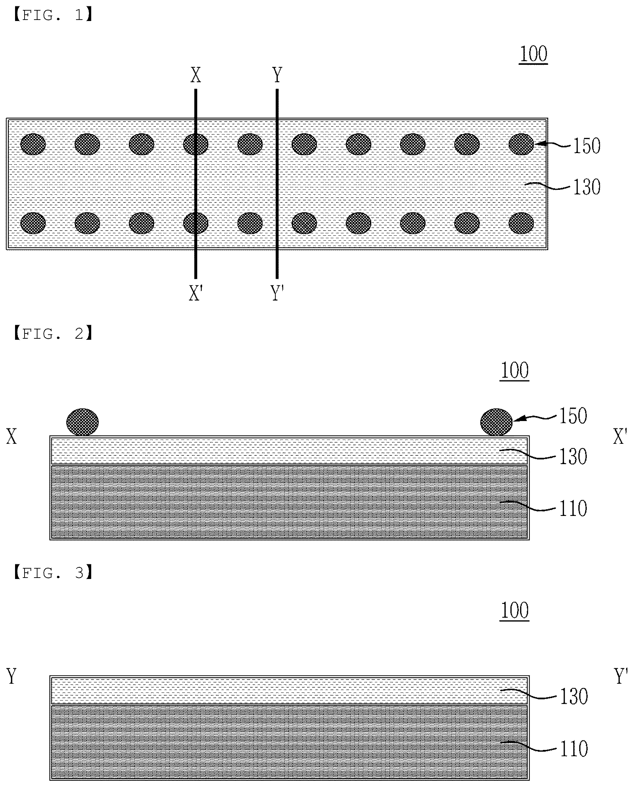

FIG. 1 is a schematic diagram of the separator 100 provided with the adhesive portion 150 according to one embodiment of the present disclosure viewed from above. In addition, FIG. 2 is a schematic diagram illustrating a cross-section structure obtained by cutting the separator of FIG. 1 along the X-X' axis. Furthermore, FIG. 3 is a schematic diagram illustrating a cross-section structure obtained by cutting the separator of FIG. 1 along the Y-Y' axis. The separator for an electrochemical device 100 according to one embodiment of the present disclosure will be specifically described with reference to FIGS. 1 to 3.

According to one embodiment of the present disclosure, the separator for an electrochemical device 100 includes a porous polymer substrate 110. As described above, the separator for an electrochemical device 100 allows lithium ions to pass through while blocking an electrical contact by including the porous polymer substrate 110, and a shutdown function may be achieved at a proper temperature.

According to one embodiment of the present disclosure, the porous polymer substrate 110 may be prepared using a polyolefin-based resin as a base resin. Examples of the polyolefin-based resin may include polyethylene, polypropylene, polypentene and the like, and the polyolefin-based resin may include one or more types thereof. A porous separator, that is, a separator having a plurality of pores, prepared using such a polyolefin-based resin as a base resin may provide a shutdown function at a proper temperature.

According to one embodiment of the present disclosure, the polyolefin-based resin may have a weight average molecular weight of 500,000 or greater and 1,500,000 or less. By adjusting the weight average molecular weight of the polyolefin-based resin in the above-described range, compression resistance of the separator may be improved. Furthermore, when different types of polyolefin-based resins are used after mixing or a separator having a multilayer structure formed with different types of polyolefin-based resins is formed, the weight average molecular weight of the polyolefin-based resin may be calculated by adding the weight average molecular weight of each of the polyolefin-based resins depending on the content ratio.

In the present disclosure, the weight average molecular weight (Mw) may be measured by gel permeation chromatography (GPC, PL GPC220, Agilent Technologies), and a condition for the measurement may be set as follows.
- Column: PL Olexis (Polymer Laboratories)
- Solvent: TCB (trichlorobenzene)
- Flow rate: 1.0 ml/min
- Sample concentration: 1.0 mg/ml
- Injection volume: 200 µl
- Column temperature: 160°C
- Detector: Agilent High Temperature RI detector
- Standard: Polystyrene (corrected by third order function)

According to one embodiment of the present disclosure, the porous polymer substrate 110 may be prepared using a method (wet method) in which a polyolefin-based resin is mixed with a plasticizer (diluent) at a high temperature to form a single phase, the polymer material and the plasticizer are phase-separated during a cooling process, and then the plasticizer is extracted to form pores, and elongation and heat setting treatments are performed.

According to one embodiment of the present disclosure, the average pore size and the maximum pore size of the separator 100 may be readily prepared to accord with the scope of the present disclosure by those skilled in the art through adjusting the mixing ratio of the plasticizer, the magnification of elongation, the heat setting treatment temperature and the like.

According to one embodiment of the present disclosure, the porous polymer substrate 110 may have a thickness of 1 µm or greater and 30 µm or less. Specifically, the porous polymer substrate 110 may have a thickness of 2 µm or greater and 28 µm or less, 3 µm or greater and 26 µm or less, 4 µm or greater and 24 µm or less, 5 µm or greater and 22 µm or less, 6 µm or greater and 20 µm or less, 7 µm or greater and 18 µm or less, 8 µm or greater and 16 µm or less, 9 µm or greater and 14 µm or less, or 9 µm or greater and 12 µm or less. By adjusting the thickness of the porous polymer substrate in the above-described range, a volume of an electrochemical device may be minimized, and a positive electrode and a negative electrode may be electrically insulated.

According to one embodiment of the present disclosure, the separator for an electrochemical device 100 includes a coating layer 130 provided on at least one surface of the porous polymer substrate 110. Specifically, the separator for an electrochemical device 100 includes a coating layer 130 provided on one or both surfaces of the porous polymer substrate 110. By the separator for an electrochemical device 100 including a coating layer 130 provided on at least one surface of the porous polymer substrate 110 as described above, heat resistance of the separator is improved, mechanical properties are improved, and an occurrence of electrical short-circuit of an electrode caused by shrinkage of the separator at a high temperature may be prevented.

According to one embodiment of the present disclosure, the coating layer 130 includes inorganic particles and a first polymer binder. By the coating layer 130 including inorganic particles and a first polymer binder as described above, heat resistance of the separator is improved, mechanical properties are improved, an occurrence of electrical short-circuit of an electrode caused by shrinkage of the separator at a high temperature may be prevented, and pores may be formed inside the coating layer.

According to one embodiment of the present disclosure, the coating layer 130 may include a plurality of pores. Specifically, the coating layer may be a porous coating layer. More specifically, the coating layer may be a porous coating layer including a plurality of pores therein. By the coating layer including a plurality of pores as described above, the separator may allow lithium ions to pass through and a current to flow while physically blocking a negative electrode and a positive electrode.

According to one embodiment of the present disclosure, the coating layer 130 may be formed by the inorganic particles being bound by the first polymer binder, and the inorganic particles being integrated in the layer. The pores inside the coating layer 130 may result from an interstitial volume, an empty space between the inorganic particles.

According to one embodiment of the present disclosure, the content of the inorganic particles may be 80 parts by weight or greater and 99 parts by weight or less with respect to 100 parts by weight of a composition for the coating layer. Specifically, the content of the inorganic particles may be 82 parts by weight or greater and 99 parts by weight or less, 84 parts by weight or greater and 99 parts by weight or less, 86 parts by weight or greater and 99 parts by weight or less, 88 parts by weight or greater and 99 parts by weight or less, 90 parts by weight or greater and 99 parts by weight or less, 92 parts by weight or greater and 98 parts by weight or less, or 94 parts by weight or greater and 96 parts by weight or less with respect to 100 parts by weight of a composition for the coating layer. By adjusting the content of the inorganic particles in the above-described range, insulation and heat resistance of the separator may be improved, preventing a phenomenon of separator shrinkage at a high temperature.

According to one embodiment of the present disclosure, the inorganic particles are not particularly limited as long as they are electrochemically stable. In other words, the inorganic particles are not particularly limited as long as they do not undergo oxidation and/or reduction reactions in the operating voltage range (for example, 0 V to 5 V based on Li/Li⁺) of an applied electrochemical device. Particularly, when inorganic particles having an ion transfer ability are used, improvement in the performance may be provided by increasing ion conductivity in an electrochemical device. In addition, when inorganic particles having a high dielectric constant are used as the inorganic particles, ion conductivity of an electrolyte liquid may be improved by contributing to an increase in the degree of dissociation of an electrolyte salt such as a lithium salt in the liquid electrolyte. The inorganic particles may include high-dielectric constant inorganic particles having a dielectric constant of 5 or greater or 10 or greater, inorganic particles having a lithium ion transfer ability, or mixtures thereof. Specifically, the inorganic particles may be one selected from the group consisting of BaSO₄, BaTiO₃, Pb(Zr, Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), antimony pentoxide (Sb₂O₃). boehmite (AlO(OH)) and combinations thereof, however, these are just an example, and the inorganic particles are not limited thereto.

According to one embodiment of the present disclosure, an average particle diameter (D50) of the inorganic particles (not shown) is not particularly limited, but is preferably in a range of 0.3 µm or greater and 1 µm or less for forming a coating layer 130 with a uniform thickness and proper porosity. Specifically, when the average particle diameter is less than 0.3 µm, dispersibility of the inorganic particles in the slurry prepared for preparing the coating layer may be reduced, and when the average particle diameter is greater than 1 µm, the thickness of the formed coating layer may increase.

In the present specification, the "D₅₀ particle diameter" means a particle diameter at a 50% point in cumulative distribution of the number of particles depending on the particle diameter. The particle diameter may be measured using a laser diffraction method. Specifically, a powder to be measured is dispersed in a dispersion medium and then introduced to a commercially available laser diffraction particle size measurement device (for example, Microtrac S3500), and a difference in the diffraction pattern depending on the particle size is measured when the particles pass through the laser beam to calculate particle size distribution. The D₅₀ particle diameter may be measured by calculating a particle diameter at a 50% point in cumulative distribution of the number of particles depending on the particle diameter in the measurement device.

According to one embodiment of the present disclosure, the first polymer binder may be a particle-type binder or a dissolved-type binder. Specifically, the particle-type binder has a property of maintaining its original particle shape without being deformed even when dispersed in a solvent, and for example, polyvinylidene-based or acryl-based polymers may correspond thereto. The dissolved-type binder may be dissolved in a polar solvent including water, and for example, polyvinyl alcohol (PVA), polyvinylpyrrolidone (PVP) or polyacrylamide (PAM) may correspond thereto. Preferably, the first polymer binder may be a particle-type binder.

According to one embodiment of the present disclosure, the first polymer binder may be a PVDF-based polymer binder. The PVDF-based polymer is a polymer including vinylidene fluoride as a polymerization unit. The PVDF-based polymer may include a homopolymer of vinylidene fluoride (that is, polyvinylidene fluoride), a copolymer of vinylidene fluoride and another polymerizable monomer (comonomer), or a mixture of two or more thereof.

The comonomer may be one or more types selected from the group consisting of tetrafluoroethylene, hexafluoropropylene, trifluoroethylene, chlorofluoroethylene, 1,2-difluoroethylene, perfluoro(methylvinyl)ether, perfluoro(ethylvinyl)ether, perfluoro(propylvinyl)ether, difluoro(1,3-dioxol), perfluoro(2,2-dimethyl-1,3-dioxol), trichloroethylene and vinyl fluoride. Nonlimiting examples of the PVDF-based polymer may include polyvinylidene fluoride, polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-ethylene and the like, and one type, or a mixture of two or more types thereof selected from among these may be used. By selecting a polyvinylidene-based binder as the first polymer binder as described above, porosity of the separator may be maintained, and adhesive strength may be maintained even when the coating layer is wet by an electrolyte liquid after activating a battery.

According to one embodiment of the present disclosure, the first polymer binder may be an acryl-based polymer binder. By selecting an acryl-based polymer binder as the first polymer binder as described above, porosity of the separator may be maintained, readiness of battery manufacturing may be improved by improving adhesive strength between the electrode and the separator in a lamination process of the battery, and a stacking process may be stably performed.

According to one embodiment of the present disclosure, the acryl-based polymer binder is a polymer including a carboxylic acid ester as a repeating unit, and may preferably be a (meth)acrylic acid ester or an acryl-styrene copolymer. Specific examples of such an (meth)acrylic acid ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra (meth) acrylate, dipentaerythritol hexa(meth) acrylate, allyl (meth)acrylate, ethylene di(meth)acrylate and the like, and (meth)acrylic acid ester may be one or more types selected from among these.

According to one embodiment of the present disclosure, the acryl-styrene copolymer may include an acryl-based binder, and the acryl-based binder may be polyacrylate-based. For example, the binder may be one or more types selected from the group consisting of styrene-butadiene rubber, nitrile-butadiene rubber, acrylonitrile-butadiene rubber, acrylonitrile-butadiene-styrene rubber and acrylate-based polymers, and specifically, may be a copolymer including an acrylate.

According to one embodiment of the present disclosure, the first polymer binder may include a PVDF-based polymer binder and an acryl-based polymer binder. Preferably, the first polymer binder may include an acryl-based binder and polyvinylidene fluoride-hexafluoropropylene (PVDF-HFP), and may include these in a weight ratio of 5:5.

According to one embodiment of the present disclosure, the content of the first polymer binder may be 0.5 parts by weight or greater and 10 parts by weight or less with respect to 100 parts by weight of the coating layer 130. Specifically, the content of the first polymer binder may be 0.5 parts by weight or greater and 9 parts by weight or less, 1 part by weight or greater and 9 parts by weight or less, 2 parts by weight or greater and 8 parts by weight or less, 3 parts by weight or greater and 7 parts by weight or less, or 4 parts by weight or greater and 6 parts by weight or less with respect to 100 parts by weight of the coating layer 130. By adjusting the content of the first polymer binder in the above-described range, assembly readiness may be improved in the process of assembling electrodes.

According to one embodiment of the present disclosure, the content of the inorganic particles included in one portion adjacent to the porous polymer substrate may be higher than the content of the inorganic particles included in another portion spaced apart from the porous polymer substrate in the coating layer 130. By the content of the inorganic particles being reduced from one portion adjacent to the porous polymer substrate to another portion spaced apart from the porous polymer substrate in the coating layer as described above, the content of the inorganic particles is higher in one portion adjacent to the porous polymer substrate, contributing to heat resistance relatively, and as the content of the polymer binder increases from one portion adjacent to the porous polymer substrate to another portion spaced apart from the porous polymer substrate compared to the content of the inorganic particles, it may contribute more to adhesive strength.

According to one embodiment of the present disclosure, a dispersant may be further included in the coating layer. By the coating layer further including a dispersant as described above, the dispersant lowers viscosity of the slurry for forming a coating layer, maximizing a difference in the density between the particle-type binder polymer and the inorganic particles. Accordingly, a separator in which the coating layer close to the porous polymer substrate has more inorganic particles and the outermost portion of the coating layer includes more particle-type binder polymers may be provided.

According to one embodiment of the present disclosure, the dispersant may include a carboxyl group and a glycol group as a functional group.

According to one embodiment of the present disclosure, the coating layer may have a thickness of 0.1 µm or greater and 20 µm or less with respect to any one side of the porous polymer substrate. Specifically, the coating layer may have a thickness of 0.2 µm or greater and 18 µm or less, 0.3 µm or greater and 16 µm or less, 0.3 µm or greater and 14 µm or less, 0.3 µm or greater and 12 µm or less, 0.3 µm or greater and 10 µm or less, 0.3 µm or greater and 8 µm or less, 0.3 µm or greater and 6 µm or less, 0.3 µm or greater and 4 µm or less, 0.3 µm or greater and 3 µm or less, or 0.3 µm or greater and 1.2 µm or less. By adjusting the thickness of the coating layer in the above-described range, the weight of the separator for an electrochemical device may be reduced while adjusting the thickness of the separator, and shrinkage of the polymer substrate may be prevented at a high temperature.

In one embodiment of the present disclosure, the thicknesses of the polymer substrate, the coating layer and/or the like may be measured using a contact-type thickness measurement device. As an example of the contact-type thickness measurement device, VL-50S-B manufactured by Mitutoyo Corporation may be used.

According to one embodiment of the present disclosure, an adhesive portion 150, which is provided on at least a portion of an outer portion of the coating layer 130, is included. By including an adhesive portion provided on at least a portion of an outer portion of the coating layer as described above, a problem of separator folding may be solved, and dry adhesive strength and wet adhesive strength may be improved.

According to one embodiment of the present disclosure, the adhesive portion 150 includes a plurality of dots. According to FIG. 1, it may be seen that the adhesive portion 150 includes a plurality of dots.

According to one embodiment of the present disclosure, the plurality of dots are arranged in parallel in a supply direction (MD, machine direction) of the coating layer 130. Specifically, according to FIG. 1, it may be seen that the plurality of dots are arranged in parallel in a supply direction (MD, machine direction) of the coating layer 130. The supply direction (MD, machine direction) may mean a machine direction when the separator is manufactured.

According to one embodiment of the present disclosure, the plurality of dots are arranged in parallel in a supply direction (MD, machine direction) of the coating layer 130, and the dots may not be arranged perpendicular to the supply direction (MD, machine direction) of the coating layer 130.

According to one embodiment of the present disclosure, the adhesive portion may have a predetermined pattern formed therein. By the adhesive portion having a predetermined pattern formed therein as described above, the adhesive portion is present only on a surface required to have adhesive strength between an electrode and the separator to improve adhesive strength, without excessively permeating into the coating layer.

According to one embodiment of the present disclosure, the pattern may include a non-coating area (not shown) in which the adhesive portion is not provided on at least a portion of an outer portion of the coating layer. The non-coating area may refer to a portion having no adhesive portion formed on an outer portion of the coating layer. By the pattern including a non-coating area in which the adhesive portion is not provided on at least a portion of an outer portion of the coating layer as described above, an increase in cell resistance may be suppressed, and a phenomenon of separator folding may be improved while improving adhesive strength.

According to one embodiment of the present disclosure, the plurality of dots may have a constant spacing. When external or internal forces such as winding, unwinding, folding, compression and expansion of battery components are applied during an assembly of an electrochemical device including the separator, the forces are applied uniformly to the separator instead of being applied locally by the plurality of dots having a constant spacing as described above, and accordingly, possibility of damages such as deformation and tearing is reduced. In addition, by the presence of the non-coating area in which the adhesive portion is not provided on at least a portion of an outer portion of the coating layer as described above, ions are transferred to both electrodes after directly passing through the pores in the separator, and accordingly, ion conductivity and battery performance may be improved.

According to one embodiment of the present disclosure, the plurality of dots may have a spacing of 50 µm or greater and 500 µm or less. Specifically, the plurality of dots may have a spacing of 60 µm or greater and 480 µm or less, 70 µm or greater and 460 µm or less, 80 µm or greater and 440 µm or less, 90 µm or greater and 420 µm or less, 100 µm or greater and 400 µm or less, 110 µm or greater and 380 µm or less, 120 µm or greater and 360 µm or less, 130 µm or greater and 340 µm or less, 140 µm or greater and 320 µm or less, 150 µm or greater and 300 µm or less, 160 µm or greater and 280 µm or less, 170 µm or greater and 260 µm or less, 180 µm or greater and 240 µm or less, 190 µm or greater and 220 µm or less, or 190 µm or greater and 210 µm or less. By adjusting the spacing of the plurality of dots in the above-described range, adhesive strength with an electrode may be improved without making a surface contact on the coating layer.

According to one embodiment of the present disclosure, the adhesive portion 150 may have a thickness of 0.1 µm or greater and 1 µm or less. Specifically, the adhesive portion 150 may have a thickness of 0.2 µm or greater and 1 µm or less, 0.3 µm or greater and 1 µm or less, 0.4 µm or greater and 1 µm or less, or 0.5 µm or greater and 1 µm or less. It is difficult to obtain the thickness of less than the above-described range by the particle diameter of the polymer binder, and when the thickness is greater than the above-described range, an electrode may be damaged as the adhesive portion overflows during a lamination process. By adjusting the thickness of the adhesive portion in the above-described range, damages to an electrode occurring as the adhesive portion overflows during a lamination process with the electrode may be prevented without excessively increasing the thickness of the entire separator.

According to one embodiment of the present disclosure, the adhesive portion 150 includes second polymer binder particles and third polymer binder particles. By the adhesive portion 150 including second polymer binder particles and third polymer binder particles as described above, both dry adhesive strength and wet adhesive strength may be improved.

According to one embodiment of the present disclosure, the second polymer binder particle may be an acryl-based polymer binder. Specifically, the acryl-based polymer binder is a polymer including a carboxylic acid ester as a repeating unit, and may preferably be a (meth)acrylic acid ester. Specific examples of such a (meth)acrylic acid ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra (meth) acrylate, dipentaerythritol hexa(meth) acrylate, allyl (meth)acrylate, ethylene di(meth)acrylate and the like, and may be one or more types selected from among these. By selecting an acryl-based polymer binder as the second polymer binder particles as described above, adhesive strength between an electrode and the separator may be maintained.

According to one embodiment of the present disclosure, the acryl-based polymer binder may have the degree of crosslinking of 70% or greater. Specifically, the acryl-based polymer binder may have the degree of crosslinking of 70% or greater and 95% or less, or 70% or greater and 90% or less. By adjusting the degree of crosslinking of the acryl-based polymer binder in the above-described range, wet adhesive strength may be maintained without being dissolved even after injecting an electrolyte liquid.

According to one embodiment of the present disclosure, the third polymer binder particle may be a polyvinyl acetate-based polymer binder. By selecting a polyvinyl acetate-based polymer binder as the third polymer binder particles as described above, dry adhesive strength is improved, and, by improving binder solubility in an electrolyte liquid, pores may be formed in a certain portion between adhesive interfaces, improving electrolyte liquid wettability.

According to one embodiment of the present disclosure, the polyvinyl acetate-based polymer binder may be one or more selected from the group consisting of a homopolymer of polyvinyl acetate (PVAc) and a copolymer of polyvinyl acetate (PVAc) and another polymerizable monomer.

According to one embodiment of the present disclosure, the second polymer binder particles and the third polymer binder particles may have a weight ratio of 9:1 to 4:6. Specifically, the second polymer binder particles and the third polymer binder particles may have a weight ratio of 9:1 to 5:5, 8:2 to 5:5, 7:3 to 5:5 or 6:4 to 5:5. By adjusting the weight ratio between the second polymer binder particles and the third polymer binder particles in the above-described range, both dry adhesive strength and wet adhesive strength may be improved, electrical resistance may be reduced, and a phenomenon of separator folding may be prevented. When the third polymer binder particles are present in excess, the content of the binder dissolved in an electrolyte liquid increases, reducing wet adhesive strength.

One embodiment of the present disclosure provides a method for manufacturing a separator for an electrochemical device, the method including: providing a porous polymer substrate; providing a coating layer by coating a slurry for a coating layer including inorganic particles and a first polymer binder on at least one surface of the porous polymer substrate; and providing an adhesive portion by coating a slurry for an adhesive portion including an acryl-based polymer binder and a polyvinyl acetate-based polymer binder in a weight ratio of 9:1 to 4:6 on at least a portion of an outer portion of the coating layer in a supply direction (MD, machine direction) of the coating layer.

By providing an adhesive portion in a small amount on an outer portion of a coating layer before an assembly process, the method for manufacturing a separator for an electrochemical device according to one embodiment of the present disclosure is capable of improving manufacturing readiness, and preventing a phenomenon of separator folding by improving adhesive strength of the separator.

According to one embodiment of the present disclosure, the method for manufacturing a separator for an electrochemical device 100 includes mixing a slurry for a coating layer including a first polymer binder and inorganic particles. By including the mixing of a slurry for a coating layer including a first polymer binder and inorganic particles as described above, the coating layer may be readily formed on the separator.

According to one embodiment of the present disclosure, the slurry for a coating layer may be provided by dispersing the first polymer binder and the inorganic particles in water, a proper solvent. By providing the slurry for a coating layer by dispersing the first polymer binder and the inorganic particles in water, a proper solvent, as described above, contaminants generated during the manufacturing process may be minimized.

According to one embodiment of the present disclosure, the method for manufacturing a separator for an electrochemical device 100 includes coating the slurry for a coating layer on at least one surface of the porous polymer substrate 110. By including the coating of the slurry for a coating layer on at least one surface of the porous polymer substrate 110 as described above, the coating layer 130 may be formed.

According to one embodiment of the present disclosure, the method includes providing an adhesive portion by coating a slurry for an adhesive portion including an acryl-based polymer binder and a polyvinyl acetate-based polymer binder in a weight ratio of 9:1 to 4:6 on at least a portion of an outer portion of the coating layer in a supply direction (MD, machine direction) of the coating layer. By the method including the providing of an adhesive portion by coating a slurry for an adhesive portion including an acryl-based polymer binder and a polyvinyl acetate-based polymer binder in a weight ratio of 9:1 to 4:6 on at least a portion of an outer portion of the coating layer in a supply direction (MD, machine direction) of the coating layer as described above, the adhesive portion 150 may be formed.

According to one embodiment of the present disclosure, the providing of an adhesive portion by coating the slurry for an adhesive portion may be performed using a spray, an inkjet, a dispenser or a nozzle. By performing the providing of an adhesive portion through coating the slurry for an adhesive portion using a spray, an inkjet, a dispenser or a nozzle as described above, the adhesive portion is mainly present on a surface required to have adhesive strength between the electrode and the separator without excessively permeating into the separator substrate during the process, and adhesive strength may be superior compared to dip coating even when the same amount of binder is coated.

According to one embodiment of the present disclosure, the providing of an adhesive portion by coating the slurry for an adhesive portion may be performed using an inkjet. By performing the providing of an adhesive portion through coating the slurry for an adhesive portion using an inkjet as described above, the adhesive portion may be uniformly coated on the coating layer in a desired pattern.

According to one embodiment of the present disclosure, the pattern may be formed with a combination of one or more types of pattern subunits selected from the group consisting of pattern subunits such as dots, circles, polygons and doughnuts having a constant spacing, but is not limited thereto. The pattern may be properly modified depending on the ratio of the non-coating area included in an outer portion of the coating layer.

According to one embodiment of the present disclosure, the separator 100 is interposed between a negative electrode and a positive electrode, and a lamination process of applying heat and/or pressure thereto for bonding is used to manufacture an electrochemical device. In one embodiment of the present disclosure, the lamination process may be performed using a roll press device including a pair of pressure rollers. In other words, a negative electrode, the separator and a positive electrode are sequentially laminated, and inserted between the pressure rollers to achieve interlayer bonding. Herein, the lamination process may be performed using a method of hot pressing.

One embodiment of the present disclosure provides an electrochemical device including: a positive electrode; a negative electrode; and the separator interposed between the positive electrode and the negative electrode.

The electrochemical device including the separator according to one embodiment of the present disclosure includes an adhesive portion provided in a small amount on an outer portion of a coating layer, and therefore, dry adhesive strength and wet adhesive strength are improved, and a phenomenon of separator folding may be prevented during a lamination process.

In the present disclosure, the electrochemical device is a device converting chemical energy into electrical energy by an electrochemical reaction, and is a concept encompassing a primary battery and a secondary battery. In the present specification, the secondary battery is capable of charging and discharging, and refers to, a lithium secondary battery, a nickel-cadmium battery, a nickel-hydrogen battery or the like. The lithium secondary battery uses lithium ions as an ion conductor, and examples thereof may include a non-aqueous electrolyte secondary battery including a liquid electrolyte, an all-solid-state battery including a solid electrolyte, a lithium polymer battery including a gel polymer electrolyte, a lithium metal battery using lithium metal as a negative electrode, and the like, but are not limited thereto.

According to one embodiment of the present disclosure, the positive electrode is provided with a positive electrode current collector, and a positive electrode active material layer including a positive electrode active material, a conductor and a binder resin on at least one side surface of the current collector. The positive electrode active material may include one type of a layered compound or a compound substituted with one or more transition metals such as lithium manganese composite oxide (LiMn₂O₄, LiMnO₂ and the like), lithium cobalt oxide (LiCoO₂) or lithium nickel oxide (LiNiO₂); lithium manganese oxide such as a chemical formula of Li₁₊ₓMn₂₋ₓO₄ (herein, x is from 0 to 0.33), LiMnO₃, LiMn₂O₃ or LiMnO₂; lithium copper oxide (Li₂CuO₂); vanadium oxide such as LiV₃O₈, LiV₃O₄, V₂O₅ or Cu₂V₂O₇; Ni-site-type lithium nickel oxide represented by a chemical formula of LiNi₁₋ₓMₓO₂ (herein, M=Co, Mn, Al, Cu, Fe, Mg, B or Ga, and x=0.01 to 0.3); lithium manganese composite oxide represented by a chemical formula of LiMn₁₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); LiMn₂O₄ in which some of Li in the chemical formula are substituted with alkaline earth metal ions; a disulfide compound; and Fe₂(MoO₄)₃, or a mixture of two or more types thereof.

According to one embodiment of the present disclosure, the negative electrode is provided with a negative electrode current collector, and a negative electrode active material layer including a negative electrode active material, a conductor and a binder resin on at least one side surface of the current collector. The negative electrode may include, as the a negative electrode active material, one type selected from among lithium metal oxide; carbon such as non-graphitizable carbon or graphite-based carbon; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based material; and titanium oxide, or a mixture of two or more types thereof.

According to one embodiment of the present disclosure, the conductor may be, for example, any one selected from the group consisting of graphite, carbon black, carbon fiber or metal fiber, metal powder, conductive whisker, conductive metal oxide, activated carbon and polyphenylene derivative, or a mixture of two or more types of conductive materials thereof. More specifically, the conductor may be one type selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more types of conductive materials thereof.

According to one embodiment of the present disclosure, the current collector is not particularly limited as long as it has high conductivity without causing chemical changes to the corresponding battery, and, for example, stainless steel, copper, aluminum, nickel, titanium, baked carbon, or aluminum or stainless steel of which surface is treated with carbon, nickel, titanium, silver or the like, and the like may be used.

According to one embodiment of the present disclosure, as the binder resin, polymers commonly used in an electrode in the art may be used. Nonlimiting examples of such a binder resin may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose and the like, but are not limited thereto.

According to one embodiment of the present disclosure, the positive electrode slurry for preparing the positive electrode active material layer may include a dispersant, and the dispersant may be a pyrrolidone-based compound. Specifically, the dispersant may be N-methylpyrrolidone (ADC-01, LG Chem).

According to one embodiment of the present disclosure, the content of the dispersant included in the positive electrode slurry may be greater than 0 part by weight and 0.5 parts by weight or less with respect to 100 parts by weight of the positive electrode slurry. Specifically, the content of the dispersant included in the positive electrode slurry may be greater than 0.05 parts by weight and 0.4 parts by weight or less with respect to 100 parts by weight of the positive electrode slurry.

According to one embodiment of the present disclosure, the negative electrode slurry for preparing the negative electrode active material layer may include a dispersant, and the dispersant may be a polypyrrolidone-based compound. Specifically, the dispersant may be polyvinylpyrrolidone (Junsei Chemical CO., Ltd. of Japan).

According to one embodiment of the present disclosure, the content of the dispersant included in the negative electrode slurry may be greater than 0 part by weight and 0.5 parts by weight or less with respect to 100 parts by weight of the negative electrode slurry. Specifically, the content of the dispersant included in the negative electrode slurry may be greater than 0.05 parts by weight and 0.4 parts by weight or less with respect to 100 parts by weight of the negative electrode slurry.

According to one embodiment of the present disclosure, the electrochemical device manufactured as above may be inserted into a proper case, and an electrolyte liquid may be injected thereinto to manufacture a battery.

According to one embodiment of the present disclosure, the electrolyte liquid is obtained by dissolving or dissociating a salt having a structure such as A⁺B⁻ in which A⁺ includes an ion consisting of an alkali metal cation such as Li⁺, Na⁺ or K⁺ or a combination thereof and B⁻ includes an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻ or C(CF₂SO₂)₃⁻ or a combination thereof, in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone) or a mixture thereof, however, the electrolyte liquid is not limited thereto.

One embodiment of the present disclosure provides a battery module including a battery including the electrochemical device as a unit cell, a battery pack including the battery module, and a device including the battery pack as a power source. Specific examples of the device may include power tools powered by an electric motor; electric motor vehicles including electric vehicles (EV), hybrid electric vehicles (HEV), plug-in hybrid electric vehicles (PHEV) and the like; electric two-wheeled bicycles including electric bicycles (E-bike) and electric scooters (E-scooter); electric golf carts; systems for power storage and the like, but are not limited thereto.

According to one embodiment of the present disclosure, the positive electrode may include a positive electrode tab portion formed to extend to one side, and the negative electrode may include a negative electrode tab portion formed to extend to the other side. By the positive electrode including a positive electrode tab portion formed to extend to one side and the negative electrode including a negative electrode tab portion formed to extend to the other side as described above, these may be brought into contact with and adhere to the adhesive portion when assembling the electrochemical device, and a phenomenon of separator folding may be prevented.

### Mode for carrying out invention

Hereinafter, the present disclosure will be described in detail with reference to examples in order to specifically describe the present disclosure. However, examples according to the present disclosure may be modified to various different forms, and the scope of the present disclosure is not construed as being limited to the examples described below. Examples of the present specification are provided in order to more fully describe the present disclosure to those having average knowledge in the art.

### <Example 1>

A polyethylene resin (weight average molecular weight 900,000) was extruded, and a porous polymer substrate (total thickness about 9 µm, porosity 40% by volume) was prepared using a wet method.

Al₂O₃ powder having a D50 particle diameter of 400 nm was prepared as inorganic particles. An acryl-based emulsion (CSB-130, Toyo Ink Co., Ltd.) and a copolymer of polyvinylidene fluoride and hexafluoropropylene (PVdF-HFP) (LBG4430LX, Arkema) were prepared as a first binder polymer, and sodium carboxymethyl cellulose (CMC-Na) (SG-L02, GL Chem.) was prepared as a dispersant.

The inorganic particles, the first binder polymer (acryl-based emulsion:PVdF-HFP=5:5) and the dispersant prepared above were added to water in a weight ratio of 95:4:1, and then the inorganic particles were crushed and dispersed to prepare a slurry for a coating layer.

The slurry for a coating layer was coated on both surfaces of the porous polymer substrate, and dried to form a coating layer having a thickness of 0.5 µm.

Acrylate (ADS11, LGC, the degree of crosslinking 70%), which is a second polymer binder particle, and polyvinyl acetate (PVAc), which is a third polymer binder particle, were introduced to water and dispersed therein to prepare a slurry for an adhesive portion (solid concentration 10% by weight). The second polymer binder particles and the third polymer binder particles were employed to have a weight ratio of 5:5.

On the coating layer, patterning with a dot spacing of 200 µm was performed by an ink jet process with a loading amount of 0.2 g/m² using the aqueous slurry for an adhesive portion. The dot had a size of about 200 µm, and a separator in which an adhesive portion was formed to have a pattern at the same spacing was manufactured. Herein, the formed adhesive portion had a thickness of 0.5 µm.

### <Example 2>

A separator was manufactured in the same manner as in Example 1, except that acrylate, which is the second polymer binder particle, had the degree of crosslinking of 90%.

### <Examples 3 to 6>

Separators were manufactured in the same manner as in Example 1, except that a weight ratio of acrylate, which is the second polymer binder particle, and polyvinyl acetate (PVAc), which is the third polymer binder particles, was adjusted as shown in the following Table 1, and acrylate, which is the second polymer binder particle, had the degree of crosslinking of 90%.

### <Example 7>

A separator was manufactured in the same manner as in Example 1, except that the adhesive portion had a thickness of 1 µm.

### <Comparative Example 1>

A separator was manufactured in the same manner as in Example 1, except that the adhesive portion was not formed.

### <Comparative Example 2>

A separator was manufactured in the same manner as in Example 1, except that the acryl-based polymer binder was not used when preparing the slurry for an adhesive portion.

### <Comparative Example 3>

A separator was manufactured in the same manner as in Example 1, except that an acryl-based polymer binder having the degree of crosslinking of 0% was used and the polyvinyl acetate-based polymer binder was not used when preparing the slurry for an adhesive portion.

### <Comparative Example 4>

A separator was manufactured in the same manner as in Example 1, except that the polyvinyl acetate-based polymer binder was not used when preparing the slurry for an adhesive portion.

### <Comparative Example 5>

A separator was manufactured in the same manner as in Example 1, except that the second polymer binder particles and the third polymer binder particles were set to have a weight ratio of 3:7 when preparing the slurry for an adhesive portion.

### <Comparative Example 6>

A separator was manufactured in the same manner as in Example 1, except that acrylate, which is the second polymer binder particle, had the degree of crosslinking of 50%.

### <Comparative Example 7>

A separator was manufactured in the same manner as in Example 1, except that the adhesive portion had a thickness of 2 µm.

### <Manufacture of Electrochemical Device>

### 1) Preparation of Positive Electrode

A positive electrode active material (LiNi_{0.8}Mn_{0.1}Co_{0.1}O₂), a conductor (carbon black), a dispersant (N-methylpyrrolidone, ADC-01, LG Chem.) and a binder resin (mixture of PVDF-HFP and PVDF) were mixed with water in a weight ratio of 97.5:0.7:0.14:1.66 to prepare a slurry for a positive electrode active material layer in which the components other than water had a concentration of 50 wt%. Then, the slurry was coated on a surface of an aluminum thin film (thickness 10 µm), and dried to prepare a positive electrode having a positive electrode active material layer (thickness 120 µm).

### 2) Preparation of Negative Electrode

Graphite (blend of natural graphite and artificial graphite), conductor (carbon black), a dispersant (polyvinylpyrrolidone, Junsei Chemical CO., Ltd. of Japan) and a binder resin (mixture of PVDF-HFP and PVDF) were mixed with water in a weight ratio of 97.5:0.7:0.14:1.66 to prepare a slurry for a negative electrode active material layer in which the components other than water had a concentration of 50 wt%. Then, the slurry was coated on a surface of a copper thin film (thickness 10 µm), and dried to prepare a negative electrode having a negative electrode active material layer (thickness 120 µm).

### <Experimental Example 1: Measurement of Dry Adhesive Strength>

The separator of each of Examples and Comparative Examples was cut to a size of 70 mm (length)x20 mm (width), and the prepared electrode and the separator were laminated under a condition of 60°C, 6.5 MPa and 1 sec using a press to prepare a specimen. The prepared specimen was attached to a glass plate using a double-sided tape for fixing, and herein, the electrode was placed to face the glass plate. The separator portion of the specimen was peeled at an angle of 180° at a rate of 150 mm/min at 25°C, strength of each of the positive electrode and the negative electrode was measured, and the results are summarized in the following Table 1.

### <Experimental Example 2: Measurement of Wet Adhesive Strength>

The separator of each of Examples and Comparative Examples was cut to a size of 70 mm (length)x20 mm (width), and the prepared electrode and the separator were laminated under a condition of 60°C, 6.5 MPa and 1 sec using a press to prepare a specimen. The prepared specimen was loaded into a battery case together with an electrolyte liquid, and kept for 4 hours to impregnate the specimen with the electrolyte liquid. As the electrolyte liquid, an electrolyte liquid in which ethylene carbonate and ethylmethyl carbonate were mixed in a volume ratio of 7:3 and LiPF₆ was prepared at a concentration of 1 M was used. After that, the specimen was taken out of the case, and then attached to a glass plate using a double-sided tape for fixing, and herein, the electrode was placed to face the glass plate. The separator portion of the specimen was peeled at an angle of 90° at a rate of 200 mm/min at 25°C, strength of each of the positive electrode and the negative electrode was measured, and the results are summarized in the following Table 1.

### <Experimental Example 3: Measurement of Resistance>

Each of the separators was interposed between SUS and an electrolyte liquid was injected thereinto to manufacture a coin cell, and resistance (ER) was measured using the method of EIS. Herein, frequency was set to a range of 100,000 Hz to 10,000 Hz. The electrolyte liquid was obtained by mixing a non-aqueous solvent in which ethylene carbonate and ethylmethyl carbonate are mixed in 3:7 with LiPF₆ at a concentration of 1 M.

**[Table 1]**

| | Binder Type of Adhesive Portion | Inkjet Coatin g Loadin g Amount (g/m²) | Dot Spac ing (µm) | Dot Size (µm) | Adhes ive Porti on Thick ness (µm) | Dry Adhes ive Stren gth (gf/2 0 mm) | Wet Adhes ive Stren gth (gf/2 0 mm) | Elect rical Resis tance (ER, Ω) | Sepa rato r Fold ing |
|---|---|---|---|---|---|---|---|---|---|
| Compar ative Exampl e 1 | - | 0.2 | 200 | 200 | 0.5 | 41.0 | 11.7 | 0.81 | Fold ed |
| Compar ative Exampl e 2 | PVAc | 0.2 | 200 | 200 | 0.5 | 63.1 | 12.0 | 0.82 | Fold ed |
| Compar ative Exampl e 3 | Acryl (degree of crosslinking 0%) | 0.2 | 200 | 200 | 0.5 | 57.6 | 12.3 | 0.86 | Fold ed |
| Compar ative Exampl e 4 | Acryl (degree of crosslinking 90%) | 0.2 | 200 | 200 | 0.5 | 53.4 | 15.3 | 0.93 | Main tain ed |
| Compar ative Exampl e 5 | Acryl (degree of crosslinking 90%) &PVAc (3:7) | 0.2 | 200 | 200 | 0.5 | 60.7 | 12.5 | 0.83 | Fold ed |
| Compar ative Exampl e 6 | Acryl (degree of crosslinking 50%)&PVAc (5:5) | 0.2 | 200 | 200 | 0.5 | 60.4 | 11.9 | 0.81 | Fold ed |
| Compar ative Exampl e 7 | Acryl (degree of crosslinking 70%)&PVAc (5:5) | 0.2 | 200 | 200 | 2 | 81.8 | 16.3 | 0.97 | Main tain ed |
| Exampl e 1 | Acryl (degree of crosslinking 70%)&PVAc (5:5) | 0.2 | 200 | 200 | 0.5 | 59.7 | 13.1 | 0.83 | Main tain ed |
| Exampl e 2 | Acryl (degree of crosslinking 90%)&PVAc (5:5) | 0.2 | 200 | 200 | 0.5 | 58.3 | 14.7 | 0.85 | Main tain ed |
| Exampl e 3 | Acryl (degree of crosslinking 90%)&PVAc (6:4) | 0.2 | 200 | 200 | 0.5 | 57.9 | 14.8 | 0.87 | Main tain ed |
| Exampl e 4 | Acryl (degree of crosslinking 90%)&PVAc (7:3) | 0.2 | 200 | 200 | 0.5 | 57.1 | 15.0 | 0.89 | Main tain ed |
| Exampl e 5 | Acryl (degree of crosslinking 90%)&PVAc (8:2) | 0.2 | 200 | 200 | 0.5 | 55.7 | 15.1 | 0.91 | Main tain ed |
| Exampl e 6 | Acryl (degree of crosslinking 90%) &PVAc (9:1) | 0.2 | 200 | 200 | 0.5 | 54.2 | 15.8 | 0.92 | Main tain ed |
| Exampl e 7 | Acryl (degree of crosslinking 70%)&PVAc (5:5) | 0.2 | 200 | 200 | 1 | 71.4 | 15.2 | 0.88 | Main tain ed |

According to Table 1, it was identified that, in Examples 1 to 7 according to one embodiment of the present disclosure, both dry adhesive strength and wet adhesive strength were improved, and a phenomenon of separator folding did not occur.

In contrast, it was seen that Comparative Example 1 that did not include an adhesive portion had poor dry adhesive strength and wet adhesive strength.

It was identified that, in Comparative Examples 2 and 3, dry adhesive strength was improved, however, wet adhesive strength significantly decreased as the binder was dissolved during injection of the electrolyte liquid, and a phenomenon of separator folding occurred.

It was seen that Comparative Example 4 that did not include polyvinyl acetate (PVAc) had poorer dry adhesive strength compared to Comparative Example 2.

It was identified that Comparative Example 5 had a very low acryl-based polymer binder content, resulting in low wet adhesive strength and consequential phenomenon of separator folding.

It was seen that, in Comparative Examples 3 and 6, since the degree of crosslinking of the acryl-based polymer binder was low, wet adhesive strength was poor as the binder was dissolved during injection of the electrolyte liquid.

It was seen that, in Comparative Example 7, the adhesive portion had an excessively increased thickness, increasing electrical resistance.

Accordingly, by including the adhesive portion provided in a small amount on an outer portion of the coating layer, the separator for an electrochemical device according to one embodiment of the present disclosure is capable of improving dry adhesive strength and wet adhesive strength, and preventing a phenomenon of separator folding during a lamination process.

### [Reference Numeral]

100: Separator for Electrochemical Device
110: Porous Polymer Substrate
130: Coating Layer
150: Adhesive Portion

## Claims

1. A separator for an electrochemical device, the separator comprising:
a porous polymer substrate;
a coating layer provided on at least one surface of the porous polymer substrate and including inorganic particles and a first polymer binder; and
an adhesive portion provided on at least a portion of an outer portion of the coating layer and including second polymer binder particles and third polymer binder particles,
wherein the adhesive portion includes a plurality of dots, and
the plurality of dots are arranged in parallel in a supply direction (MD, machine direction) of the coating layer.

2. The separator of claim 1, wherein the second polymer binder particle is an acryl-based polymer binder, and the third polymer binder particle is a polyvinyl acetate-based polymer binder.

3. The separator of claim 1, wherein the second polymer binder particles and the third polymer binder particles have a weight ratio of 9:1 to 4:6.

4. The separator of claim 1, wherein the adhesive portion has a predetermined pattern formed therein.

5. The separator of claim 4, wherein the pattern includes a non-coating area in which the adhesive portion is not provided on at least a portion of an outer portion of the coating layer.

6. The separator of claim 1, wherein the plurality of dots have a constant spacing.

7. The separator of claim 6, wherein the plurality of dots have a spacing of 50 µm or greater and 500 µm or less.

8. The separator of claim 1, wherein the adhesive portion has a thickness of 0.1 µm or greater and 1 µm or less.

9. The separator of claim 2, wherein the acryl-based polymer binder has a degree of crosslinking of 70% or greater.

10. A method for manufacturing a separator for an electrochemical device, the method comprising:
providing a porous polymer substrate;
providing a coating layer by coating a slurry for a coating layer including inorganic particles and a first polymer binder on at least one surface of the porous polymer substrate; and
providing an adhesive portion by coating a slurry for an adhesive portion including an acryl-based polymer binder and a polyvinyl acetate-based polymer binder in a weight ratio of 9:1 to 4:6 on at least a portion of an outer portion of the coating layer in a supply direction (MD, machine direction) of the coating layer.

11. The method of claim 10, wherein the providing of an adhesive portion by coating the slurry for an adhesive portion is performed using a spray, an inkjet, a dispenser or a nozzle.

12. An electrochemical device comprising:
a positive electrode;
a negative electrode; and
the separator of claim 1 interposed between the positive electrode and the negative electrode.

13. The electrochemical device of claim 12, wherein the positive electrode includes a positive electrode tab portion formed to extend to one side, and the negative electrode includes a negative electrode tab portion formed to extend to the other side.
